# EUROPÄISCHE PATENTSCHRIFT

(11) **EP 0 371 238 B1**
(45) Veröffentlichungstag und Bekanntmachung des Hinweises auf die Patenterteilung: **24.03.1993**
(21) Anmeldenummer: 89119017.5
(22) Anmeldetag: 13.10.1989
(51) Int. Cl.: A01D 34/68, A01D 34/73

(54) **Messerbalken für einen Sichelmäher**
Cutter bar for a lawn mower
Barre de coupe pour tondeuse à gazon

(30) Priorität: 26.11.1988 DE 3839918
(43) Veröffentlichungstag der Anmeldung: 06.06.1990
(73) Patentinhaber: SABO-MASCHINENFABRIK AKTIENGESELLSCHAFT, D-51645 Gummersbach (DE)
(72) Erfinder: Ostermeier, Heinrich, D-5000 Köln 90 (DE)
(74) Vertreter: Harwardt, Günther, Dipl.-Ing.

(56) Entgegenhaltungen:
- EP-A- 0 136 988
- DD-A- 128 895
- US-A- 3 910 017
- US-A- 4 774 803

## Beschreibung

Die Erfindung betrifft einen rotierenden Messerbalken für einen motorisch angetriebenen Sichelmäher, nach dem Oberbegriff des Anspruchs 1.

Ein solcher Messerbalken ist aus der US-A-3,910,017 bekannt. Der Messerbalken ist zur Einzielung eines ruhigeren Laufes mit zwei nach oben herausgedrückten Versteifungssicken versehen, die sich, ausgehend von einem der Drehachse nahen Ende, mittig des Messerbalkens über einen radialen Teilbereich der Arme etwa bis zum Anfangsbereich der Schneidkanten erstrecken. Um die Luftströmung im Kanal des Gehäuses zum Transport des abgetrennten Grases nicht zu stören, ist die Sicke nach oben und mit sanften Übergängen zur Oberfläche des Messerbalkens herausgeprägt.

Aus der DD-A-128895 ist ein Messerbalken bekannt, der mit zwei Sicken zur Versteifung versehen ist, von denen eine vor dem Flügel endet und die andere, sich abflachend und einen Übergang von der abgeknickten Schneidenkante zur Messeroberfläche bildend, bis in den die Schneidkante aufweisenden Bereich hineinragt.

Aus der US-A-4,774,803 ist schließlich ein Messerbalken bekannt, der zum Boden des Gehäuses des Mähers eben gestaltet ist und zum Boden hin, auf dem der Mäher aufsteht, mit einem nach unten vorspringenden Steg versehen ist. Dieser kann auch kurvenförmig verlaufend an der Unterseite des Messerbalkens befestigt sein. Auch eine lösbare Befestigung ist vorgeschlagen. Je nach Ausführungsform soll dieser Steg dazu dienen, den Messerbalken zum Schneeräumen oder Mulchen von Gras zu nutzen.

Bei Rasenmähern soll unter allen denkbaren Arbeitsbedingungen eine möglichst konstante Mähleistung gewährleistet sein. Mit den herkömmlichen Messerbalken mit Flügeln wird insbesondere beim Mähen in feuchtem Gras und/oder einen höheren Wassergehalt aufweisenden Gras eine befriedigende Mähleistung im Verhältnis zur Mähleistung bei trockenem Gras nicht erreicht, da der Kanal des Mähergehäuses, in dem der Messerbalken rotiert, zumindest zu einem wesentlichen Teil verstopft. Diese Situation tritt insbesondere beim Mähen des Frühjahrgrases auf. Während bei Messerbalken mit niedrigen, aber über eine größere Breite des Kanals sich erstreckenden Flügeln in der Regel eine vollständige Verstopfung bei diesen Arbeitsbedingungen eintritt, bleibt bei solchen mit schmaleren aber höheren Flügeln noch eine stark reduzierte Mähleistung erhalten.

Der Erfindung liegt daher die Aufgabe zugrunde, einen Messerbalken zu schaffen, mit dem, ohne daß die Mähleistung bei trockenem Gras herabgesetzt wird, eine verbesserte Mähleistung bei feuchtem oder nassem Gras gegeben ist.

Diese Aufgabe wird erfindungsgemäß dadurch gelöst, daß der Wulst von dem, der Drehachse radial nächstliegenden Ende bis zu dem der Drehachse radial entfernten Ende der Schneidkante mit gleichbleibenden oder sich vergrößerndem Abstand zur Schneidkante verläuft.

Der zusätzlich zum Flügel angeordnete Wulst sorgt für eine Verwirbelung, so daß das Gras, das bei den bekannten Messerbalken aufgrund der Flügelanordnung gegen die Deckfläche des Kanals geschleudert wird, dort anhaftet und sich fortlaufend aufbaut, in Richtung der Kanalerstreckung umgeleitet wird. Es erhält also einen zusätzlichen Drall in der Förderrichtung auf die Auswurföffnung zu. Bei den bekannten Einrichtungen erfolgt auch ein Aufbau von zu transportierendem Gras an den Wandungen des Kanals, in dem der Messerbalken rotiert und zwar insbesondere an der zur Drehachse entfernten Wandung. Diese Wandung wird jedoch mit Messerbalken nach der Erfindung aufgrund der von der Wulst erzeugten Verwirbelung sauber gehalten, so daß insgesamt eine höhere Mähleistung erzielt wird. Außerdem wird aufgrund der Wulst insgesamt eine höhere Transportenergie auf das abgemähte Gut ausgeübt, so daß auch der Füllungsgrad einer angehängten Fangeinrichtung, beispielsweise in Form eines Fangsackes, erhöht wird.

Ein weiterer wesentlicher Vorteil der erfindungsgemäßen Lösung besteht darin, daß die gesteigerte Mähleistung erreicht wird, ohne daß der Geräuschpegel, der von einem ansonsten gleichen Messer ohne Wulst erzeugt wird, negativ beeinflußt, d.h. erhöht wird.

Bevorzugt ist der Wulst in der Draufsicht auf die Oberseite des Messerbalkens kurvenförmig ausgebildet. Es ist jedoch auch möglich, den Wulst in der Draufsicht auf die Oberseite des Messerbalkens geradlinig verlaufen zu lassen.

Bei der Ausgestaltung mit kurvenförmigem Verlauf kann der Wulst entweder als Kreisbogen ausgestaltet sein oder aber eine Krümmung aufweisen, die mit größer werdender Entfernung von der Drehachse zunimmt. Schließlich wurde erkannt, daß sich eine besonders günstige Wirkung der Wulst ergibt, wenn deren Außenfläche im Querschnitt als Kreisbogen ausgebildet ist.

Bevorzugt soll dabei der Übergang zwischen der angrenzenden Fläche der Oberseite des Messerbalkens und der Wulst abrupt verlaufen. In weiterer Ausgestaltung ist vorgesehen, daß sich der Wulst bis in den Flügel hinein erstreckt.

Ferner ist vorgesehen, daß die Höhe der Wulst, gemessen von der Messerbalkenoberseite, zum Flügel hin abnimmt.

Des weiteren ist nach der Erfindung vorgeschlagen, daß der Wulst an der äußeren Rotationskante der Arme endet. Besonders günstige Förderverhältnisse und Mähleistungen ergeben sich jedoch dann, wenn der Wulst an der Hinterkante des Flügels endet.

Bevorzugt liegt der Radius des Kreisbogens der Außenfläche der Wulst zwischen 6 mm und 12 mmm.

Um den abrupten Übergang zu erzielen, ist vorgeschlagen, den Übergang scharfkantig oder mit einem kleinen Radius von etwa 1mm bis 2mm auszubilden.

Der Wulst kann in einfacher Weise als Sicke aus der Oberseite des Messerbalkens herausgedrückt werden.

Es ist jedoch auch möglich, den Wulst als Buckel aufzuschweißen, als separates Teil herzustellen und mit dem Messer zu verbinden oder in sonstiger Weise durch Auftragen auf dem Messer zu erzeugen.

Besonders günstige Verhältnisse ergeben sich, wenn der Wulst bei einem Messerbalken eingesetzt wird, der zusätzlich in seinem mittleren Bereich mit einer Sicke versehen ist, in der der Wulst jeweils endet, wobei die Sicke in der Draufsicht auf die Oberseite des Messerbalkens S-förmig verläuft und jeweils in den Hinterkanten der Arme endet.

Zur Erhöhung der Steifigkeit bei einem ansonsten flachen Messer wird vorgeschlagen, den Wulst bis in die Nähe der Drehachse zur Erzeugung einer Versteifung weiterzuführen.

Es ist schließlich auch denkbar, daß der Wulst in der Draufsicht auf die Oberseite des Messerbalkens einen kombinierten linearen und/oder kurvenförmigen Verlauf aufweist.

Zwei bevorzugte Außführungsbeispiele eines Messerbalkens nach der Erfindung sind in der Zeichnung schematisch dargestellt und ebenso die Anordnung eines Messerbalkens in einem Mäher.

Es zeigt
- Fig. 1: die Darstellung eines Mähers mit einem Messerbalken,
- Fig. 2: einen Messerbalken einer ersten Ausführungsform in Draufsicht,
- Fig. 3: eine Vorderansicht zu Fig. 2,
- Fig. 4: eine Seitenansicht zu Fig. 2,
- Fig. 5: einen Schnitt A-A bezüglich eines Details gemäß Fig. 2 in vergrößertem Maßstab und
- Fig. 6: einen Messerbalken einer alternativen Ausführung der Wulst in Draufsicht.

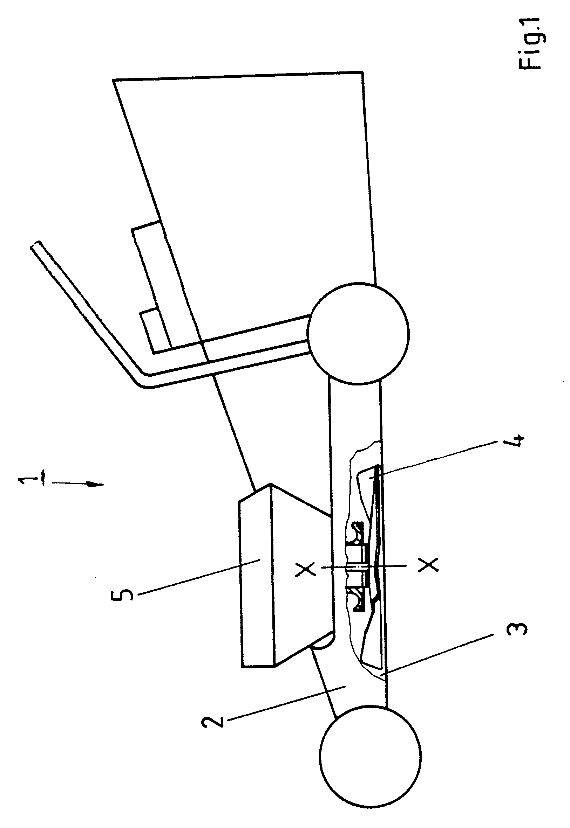

Der in Fig. 1 dargestellte Mäher 1 umfaßt im wesentlichen das Gehäuse 2, einen Motor 5 und den Griffholm für die Bedienungsperson.

Das Gehäuse 2 weist einen sich im wesentlichen als Kreisring um die Drehachse x-x, die die Antriebsachse des Motors darstellt, ausgebildeten Kanal 3 auf.

In dem Kanal 3 ist ein Messerbalken 4, der vom Motor 5 drehend angetrieben ist, auf der Drehachse x-x angeordnet.

Wie aus den Zeichnungsfiguren 2 bis 6 hervorgeht, ist der Messerbalken 4 im wesentlichen symmetrisch aufgebaut. Er besitzt zentral eine Bohrung 19, mit der er an dem Antriebsstummel des Motors 5 befestigt ist. Ausgehend von der Drehachse X-X, welche auch die Achse der Bohrung 19 darstellt, ist der Messerbalken 4 zweiarmig ausgebildet, dessen beiden Arme mit 6 bzw. 6a bezeichnet sind. Im mittleren, zentralen Bereich besitzt der Messerbalken 4 eine in Richtung seiner Oberseite 11 herausgedrückte Versteifungssicke 14, die in der Draufsicht S-förmig verläuft und deren Enden jeweils an der Hinterkante 10 des Messerbalkens 4 enden. Es kann jedoch auch auf die Versteifung ganz verzichtet werden. Der Messerbalken 4 ist also eben ausgestaltet. Der Messerbalken 4 besitzt an den beiden Vorderkanten 8 seiner Arme 6, 6a, das sind die Kanten, die in Drehrichtung Y vorne liegen, Schneidkanten 9, mit denen das Gras abgetrennt wird. Nach hinten von der Vorderkante bzw. den Schneiden 9 weg erstrecken sich Flügel 7, die ansteigend verlaufen. Bevorzugt verläuft die Oberfläche 11 des Messerbalkens 4 im Bereich ausgehend von den Schneidkanten 9 zunächst eben und geht dann in den ansteigenden Bereich der Flügel 7 über. Die Flügel 7 erstrecken sich über einen wesentlichen Teil der Breite bzw. radialen Erstreckung der Schneidkanten 9. Auf der Messerbalkenoberseite 11 sind jeweils den Schneiden 9 zugeordnete Wulste 12 vorgesehen.

Diese können sich als reine Verstärkungsicken des Messer auch bis in die Nähe der Drehachse weitergeführt werden.

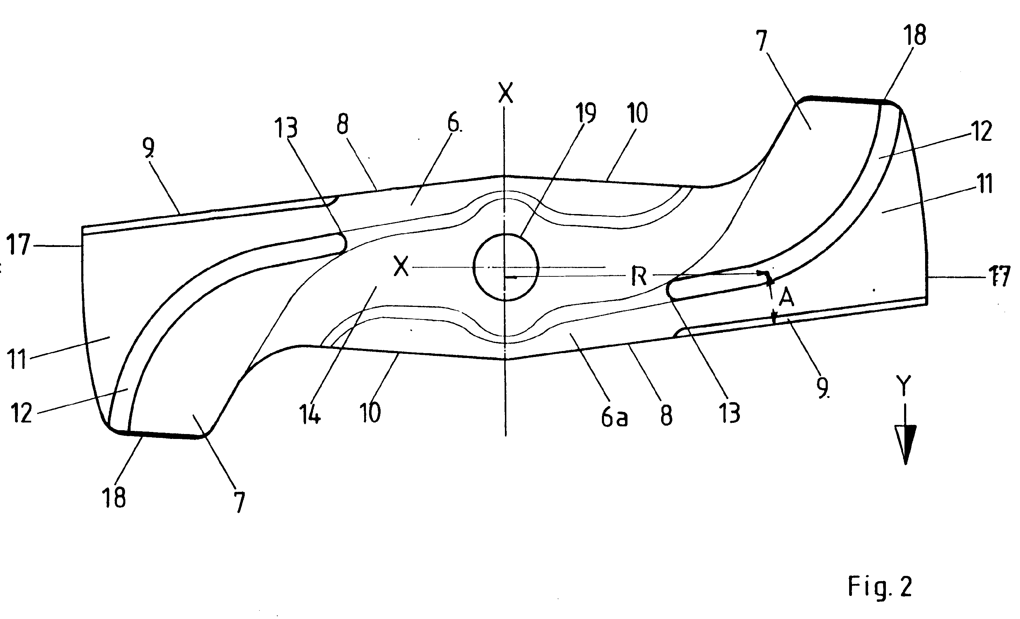

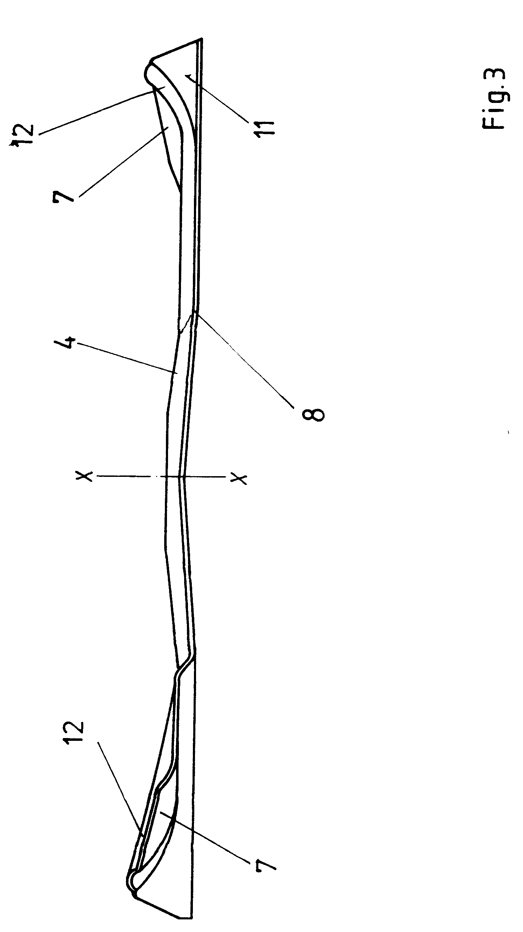

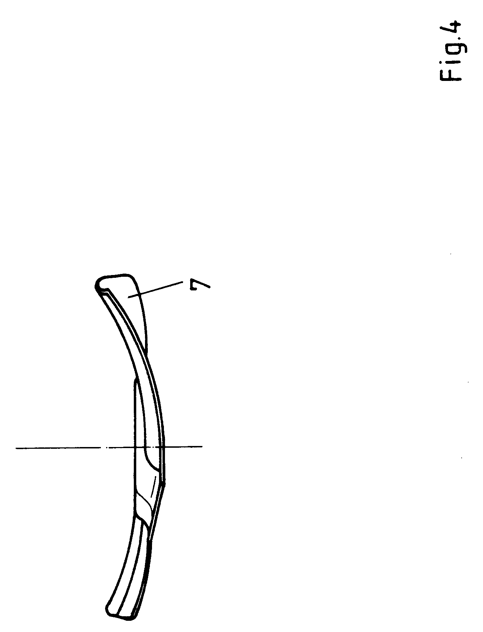

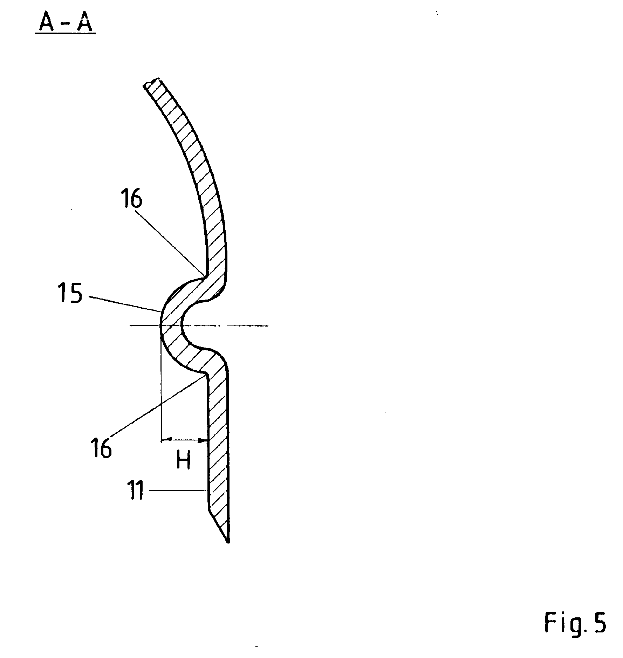

Die Wulste 12 sind bei der Ausführungsform nach den Fig. 2 bis 5 so gestaltet, daß sie zunächst von ihrem der Schneidkante 9 und außerdem der Drehachse X-X nächstliegenden Ende 13 mit größer werdender Entfernung R von der Drehachse X-X zunächst mit gleichbleibenden und dann mit vergrößertem Abstand A von der Schneidkante 9 verlaufen. Der Wulst 12 endet in der Hinterkante 18 des Flügels 7. Ausgehend von ihrem der Drehachse X-X nächstliegenden Ende in Richtung auf ihr an der Hinterkante 18 des Flügels abschließendes Ende, nimmt die Höhe der Wulst 12 ab. Insbesondere aus der Zeichnungsfigur 4 und 5 ist ersichtlich, daß der Wulst 12 sich abrupt aus der Oberfläche 11 des Messerbalkens 4 erhebt. Er ist bevorzugt im Querschnitt mit einer kreisbogenförmigen Außenfläche 15 versehen. Der Übergang 16 zwischen Wulst 12 und Oberseite 11 ist scharfkantig abrupt bzw. mit einem kleinen Radius in der Größenordnung von 1 bis 2 mm ausgebildet. Es ist ferner ersichtlich, daß der Wulst 12 sickenförmig aus der Oberfläche herausgedrückt ist. Die dargestellte Ausführungsform ergibt besonders günstige Mäh- und Transportleistungen des Messerbalkens 4. Es wird ein Verstopfen des Kanals 3 beim Mähen im nassen und insbesondere im Frühjahrsgras verhindert. Gleichzeitig wird aufgrund der Verwirbelung, die durch den Wulst 12 erzeugt wird, ein verbesserter Füllungsgrad für die Fangeinrichtung des Mähers 1 erzielt, ohne daß der Geräuschpegel ansteigt.

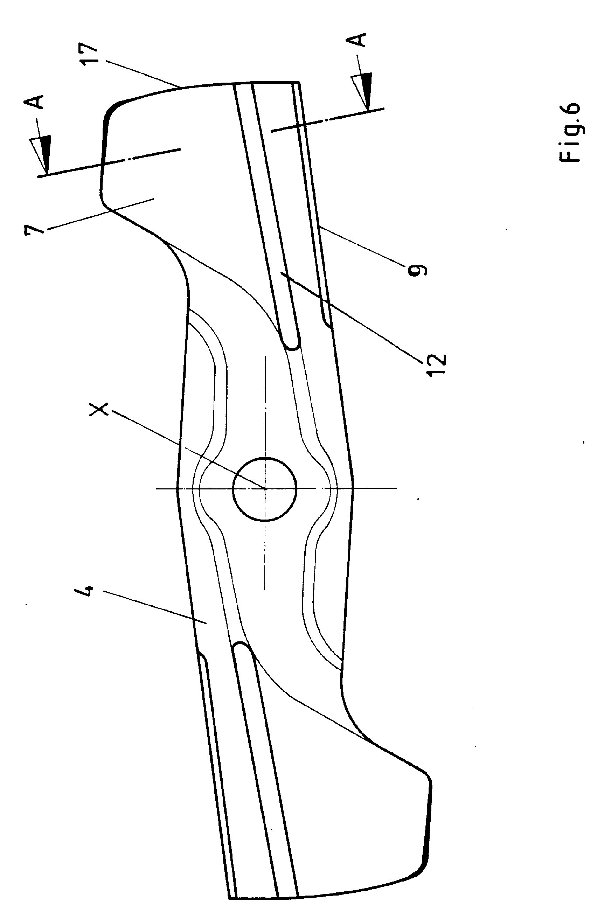

Gute Ergebnisse werden aber auch mit einer Ausführungsform, wie sie aus Fig. 6 ersichtlich ist, erzielt. In diesem Fall verläuft ist der Wulst 12 des Messerbalkens 4 geradlinig . Der Wulst 12 endet mit seinem der Drehachse X-X entfernten Ende an der Rotationskante 17 des Messerbalkens 4 und nicht an der Hinterkante des Flügels 7. Es wurde festgestellt, daß die Transport- und Mähleistung eines Messerbalkens 4 mit einem Wulst 12 gröber wird, wenn eine stärkere Krümmung vorgesehen ist, d.h., wenn mit gröber werdendem radialen Abstand von der Drehachse X-X auch eine erheblich gröber werdende Entfernung von der Schneidkante 9 gegeben ist. Die Höhe H, mit der der Wulst 12 die Oberseite 11 des Messerbalkens 4 überragt, muß so bemessen sein, daß der an der Wulst 12 abgelenkte Grasstrom den hinter der Wulst liegenden Bereich des Messerbalkens 4 nicht mehr berüht.

### Bezugszeichenliste :

- 1: Mäher
- 2: Gehäuse
- 3: Kanal
- 4: Messerbalken
- 5: Motor
- 6:
- 6a: Arme
- 7: Flügel
- 8: Vorderkante
- 9: Schneidkante
- 10: Hinterkante
- 11: Oberseite
- 12: Wulst
- 13: der Drehachse angenähertes Ende der Wulst
- 14: S-Sicke
- 15: Außenfläche der Wulst
- 16: Übergang Wulst/Oberseite des Messerbalkens
- 17: Rotationskante
- 18: Hinterkante des Flügels
- 19: Bohrung
- Y: Drehrichtung
- X-X: Drehachse
- A: Abstand von der Schneidkante
- R: Abstand von der Drehachse
- H: Höhe der Wulst

## Patentansprüche

1. Rotierender Messerbalken für einen motorisch angetriebenen Sichelmäher, welcher zwei von seiner Drehachse (x-x) im wesentlichen sich radial erstreckende Arme (6,6a) aufweist, die an ihren in Drehrichtung gesehen vorne liegenden Vorderkanten (8) Schneidkanten (9) aufweisen und Flügel (7) vorgesehen sind, die in Drehrichtung gesehen nach rückwärts ansteigend verlaufen, und
jeweils auf der von der Schneidkante (9) in Drehrichtung gesehen nach rückwärts hin zunächst eben verlaufenden Oberseite der Arme (6,6a) des Messerbalkens (4) ein nach oben vorspringender Wulst (12) vorhanden ist,
dadurch gekennzeichnet,
daß der Wulst (12) von dem der Drehachse (x-x) radial nächstliegenden Ende (13) bis zu dem der Drehachse (x-x) radial entfernten Ende der Schneidkante (9) mit gleichbleibendem oder sich vergrößerndem Abstand (a) zur Schneidkante (9) verläuft.

2. Messerbalken nach Anspruch 1,
dadurch gekennzeichnet,
daß der Wulst (12) in der Draufsicht auf die Oberseite (11) des Messerbalkens (4) kurvenförmig verläuft.

3. Messerbalken nach Anspruch 1,
dadurch gekennzeichnet,
daß der Wulst (12) in der Draufsicht auf die Oberseite (11) des Messerbalkens (4) geradlinig verläuft.

4. Messerbalken nach Anspruch 2,
dadurch gekennzeichnet,
daß der Wulst (12) in der Draufsicht auf den Messerbalken (4) als Kreisbogen verläuft.

5. Messerbalken nach Anspruch 2,
dadurch gekennzeichnet,
daß die Krümmung des kurvenförmigen Verlaufes der Wulst (12) mit größer werdender Entfernung von der Drehachse (x-x) zunimmt.

6. Messerbalken nach Anspruch 1,
dadurch gekennzeichnet,
daß die Außenfläche (15) der Wulst (12) im Querschnitt als Kreisbogen ausgebildet ist.

7. Messerbalken nach Anspruch 1,
dadurch gekennzeichnet,
daß der Übergang (16) zwischen der angrenzenden Fläche der Oberseite (11) des Messerbalkens (4) und der Wulst (12) abrupt verläuft.

8. Messerbalken nach Anspruch 1,
dadurch gekennzeichnet,
daß der Wulst (12) sich bis in den Flügel (7) hinein erstreckt.

9. Messerbalken nach Anspruch 1,
dadurch gekennzeichnet,
daß die Höhe (H) der Wulst (12), gemessen von der Messerbalkenoberseite (11), zum Flügel (7) hin abnimmt.

10. Messerbalken nach Anspruch 1,
dadurch gekennzeichnet,
daß der Wulst (12) an der äußeren Rotationskante (17) der Arme (6, 6a) endet.

11. Messerbalken nach Anspruch 1,
dadurch gekennzeichnet,
daß der Wulst (12) an der Hinterkante (18) des Flügels (7) endet.

12. Messerbalken nach Anspruch 6,
dadurch gekennzeichnet,
daß der Radius des Kreisbogens zwischen 6 mm und 12 mm beträgt.

13. Messerbalken nach Anspruch 7,
dadurch gekennzeichnet,
daß der Übergang (16) scharfkantig oder mit einem kleinen Radius von 1mm bis 2mm ausgebildet ist.

14. Messerbalken nach Anspruch 1,
dadurch gekennzeichnet,
daß der Wulst (12) als Sicke aus der Oberseite (11) herausgedrückt ist.

15. Messerbalken nach Anspruch 1,
dadurch gekennzeichnet,
daß der Wulst (12) als Buckel aufgeschweißt ist.

16. Messerbalken nach Anspruch 1,
dadurch gekennzeichnet,
daß der Wulst (12) mit seinem der Drehachse (x-x) nächstliegenden Ende (13) in einer Sicke (14) endet, die in der Draufsicht auf die Oberseite (11) S-förmig verläuft und jeweils an den Hinterkanten (10) der Arme (6, 6a) endet.

17. Messerbalken nach Anspruch 1,
dadurch gekennzeichnet,
daß der Wulst (12) bis in die Nähe der Drehachse (X-X) als Versteifung weitergeführt ist.

18. Messerbalken nach Anspruch 1,
dadurch gekennzeichnet,
daß der Wulst (12) in der Draufsicht auf die Oberseite (11) des Messerbalkens (4) einen kombinierten linearen und/oder kurvenförmigen Verlauf aufweist.

## Claims

1. A rotatable cutter blade for a rotary mower driven by a motor, comprising two arms (6, 6a) which extend substantially radially from its rotational axis (x-x) and whose front edges (8) positioned in front if viewed in the direction of rotation comprise cutting edges (9), the arms including wings (7) which, if viewed in the direction of rotation, extend so as to rise rearwards, with an upwardly projecting enlargement (12) being provided on the upper face of the arms (6, 6a) of the blade (4), which upper face initially extends in a planar manner and rearwards from the cutting edge (9) if viewed in the direction of rotation,
characterised in
that from the end (13) of the cutting edge (9) radially closest to the rotational axis (x-x) to the end of the cutting edge (9) radially remote from the rotational axis (x-x), the enlargement (12) extends at a constant or increasing distance (1) from the cutting edge (9).

2. A blade according to claim 1,
characterised in
that in a plan view of the upper face (11) of the blade (4), the enlargement (12) extends in a curved manner.

3. A blade according to claim 1,
characterised in
that in a plan view of the upper face (11) of the blade (4), the enlargement (12) extends in a straight line.

4. A blade according to claim 2,
characterised in
that in a plan view of the blade (4), the enlargement (12) extends in a circular arch.

5. A blade according to claim 2,
characterised in
that the curvature of the enlargement (12) increases with an increasing distance from the rotational axis (x-x).

6. A blade according to claim 1,
characterised in
that the outer face (15) of the enlargement (12), in section, has the shape of a circular arch.

7. A blade according to claim 1,
characterised in
that the transition (16) between the adjoining face of the upper face (11) of the blade (4) and the enlargement (12) is abrupt.

8. A blade according to claim 1,
characterised in
that the enlargement (12) extends as far as and into the wings (7).

9. A blade according to claim 1,
characterised in
that, if measured from the upper face (11) of the blade, the height (H) of the enlargement (12) decreases towards the wing (7).

10. A blade according to claim 1,
characterised in
that the enlargement (12) terminates at the outer rotational edge (17) of the arms (6, 6a).

11. A blade according to claim 1,
characterised in
that the enlargement (12) terminates at the rear edge (18) of the wing (7).

12. A blade according to claim 6,
characterised in
that the radius of the circular arch amounts to between 6mm and 12mm.

13. A blade according to claim 7,
characterised in
that the transition (16) is sharp-edged or provided with a small radius of 1mm to 2mm.

14. A blade according to claim 1,
characterised in
that the enlargement (12) is pressed so as to project out of the upper face (11).

15. A blade according to claim 1,
characterised in
that the enlargement (12) is welded on so as to form a projection.

16. A blade according to claim 1,
characterised in
that with its end (13) closest to the rotational axis (x-x), the enlargement (12) terminates in a rib (14) which, in a plan view of the upper face (11), extends in S-like manner and terminates at the rear edges (10) of the arms (6, 6a).

17. A blade according to claim 1,
characterised in
that the enlargement (12) is continued as far as the region close to the rotational axis (x-x), constituting a reinforcement.

18. A blade according to claim 1,
characterised in
that the enlargement ( 12), in a plan view of the upper face ( 11) of the blade (4), extends both in a linear and/or curved manner.

## Revendications

1. Barre de coupe tournante pour tondeuse à gazon entraînée par moteur, qui présente deux bras (6, 6a) s'étendant sensiblement radialement à partir de son axe de rotation (x-x), et munis d'arêtes tranchantes (9) le long de leurs bords avant (8), situés en avant, considéré dans le sens de rotation, dans laquelle des ailettes (7) s'étendent en pente montante vers l'arrière, considéré dans le sens de rotation, et dans laquelle un bourrelet (12) fait saillie vers le haut sur la face supérieure des bras (6, 6a) de la lame de coupe (4) qui, en partant de l'arête tranchante (9) s'étend tout d'abord à plat vers l'arrière, considéré dans le sens de rotation, caractérisée en ce que
de son extrémité (13) radialement la plus proche de l'axe de rotation (x-x) jusqu'à l'extrémité de l'arête tranchante (9) radialement distante de l'axe de rotation (x-x), le bourrelet (12) s'étend à un écartement (a) de l'arête tranchante (9) qui est constant ou croissant.

2. Barre de coupe selon la revendication 1,
caractérisée
en ce que, dans une vue de dessus de la face supérieure (11) de la lame de coupe (4), le bourrelet s'étend en courbe.

3. Barre de coupe selon la revendication 1,
caractérisée
en ce que, dans une vue de dessus de la face supérieure (11) de la lame de coupe (4), le bourrelet (12) s'étend en ligne droite.

4. Barre de coupe selon la revendication 2,
caractérisée
en ce que, dans une vue de dessus de la lame de coupe (4), le bourrelet (12) s'étend en arc de cercle.

5. Lame de coupe selon la revendication 2,
caractérisée
en ce que la courbure du tracé courbe du bourrelet (12) croît avec l'accroissement de l'éloignement de l'axe de rotation (x-x).

6. Lame de coupe selon la revendication 1,
caractérisée
en ce que la surface extérieure (15) du bourrelet (12) présente la forme d'un arc de cercle en section transversale.

7. Lame de coupe selon la revendication 1,
caractérisée
en ce que la transition (16) entre la surface adjacente de la face supérieure (11) de la lame de coupe (4) et le bourrelet (12) est abrupte.

8. Lame de coupe selon la revendication 1,
caractérisée
en ce que le bourrelet (12) se prolonge jusque dans l'ailette (7).

9. Lame de coupe selon la revendication 1,
caractérisée
en ce que la hauteur (H) du bourrelet (12), mesurée à partir de la face supérieure (11) de la lame de coupe, décroît en direction de l'ailette (7).

10. Lame de coupe selon la revendication 1,
caractérisée
en ce que le bourrelet (12) se termine au droit de l'arête de rotation extérieure (17) des bras (6, 6a).

11. Lame de coupe selon la revendication 1,
caractérisée
en ce que le bourrelet (12) se termine au droit du bord arrière (18) de l'ailette (7).

12. Lame de coupe selon la revendication 6,
caractérisée
en ce que le rayon de l'arc de cercle est d'entre 6 mm et 12 mm.

13. Lame de coupe selon la revendication 7,
caractérisée
en ce que le raccordement (16) est à angle vif ou muni d'un petit rayon d'arrondi de 1 mm à 2 mm.

14. Lame de coupe selon la revendication 1,
caractérisée
en ce que le bourrelet (12) forme une moulure repoussée dans la face supérieure (11).

15. Lame de coupe selon la revendication 1,
caractérisée
en ce que le bourrelet (12) est constitué par un bossage soudé.

16. Lame de coupe selon la revendication 1,
caractérisée
en ce que le bourrelet (12) se termine, à son extrémité (13) la plus proche de l'axe de rotation (x-x), dans une moulure (14) qui, dans une vue de dessus de la face supérieure (11), est en forme de S et se termine aux bords arrière (10) des bras (6, 6a).

17. Lame de coupe selon la revendication 1,
caractérisée
en ce que le bourrelet (12) est prolongé jusque dans le voisinage de l'axe de rotation (X-X) pour former un raidissement.

18. Lame de coupe selon la revendication 1,
caractérisée
en ce que le bourrelet (12) présente, dans une vue de dessus de la face supérieure (11) de la lame de coupe (4), un tracé combiné linéaire et/ou courbe.
